# EUROPÄISCHE PATENTSCHRIFT

(11) **EP 1 101 923 B1**
(45) Veröffentlichungstag und Bekanntmachung des Hinweises auf die Patenterteilung: **04.01.2006**
(21) Anmeldenummer: 00123900.3
(22) Anmeldetag: 03.11.2000
(51) Int. Cl.: F02F 3/00, F16J 1/18, F16J 1/08

(54) **Kolben für Brennkraftmaschinen**
Piston for an internal combustion engine
Piston pour un moteur à combustion interne

(30) Priorität: 16.11.1999 DE 19955197
(43) Veröffentlichungstag der Anmeldung: 23.05.2001
(73) Patentinhaber: Federal-Mogul Wiesbaden GmbH & Co.KG, 65201 Wiesbaden (DE)
(72) Erfinder: Hoppe-Boeken, Peter-Clemens, 74906 Bad Rappenau (DE)
(74) Vertreter: Fuchs Mehler Weiss & Fritzsche

(56) Entgegenhaltungen:
- DE-U- 8 815 283
- GB-A- 356 612
- GB-A- 757 226
- US-A- 3 494 262
- US-A- 3 515 035
- US-A- 4 785 720

## Beschreibung

Die Erfindung betrifft eine Kolbenanordnung gemäß dem Oberbegriff des Patentanspruchs 1.

Eine derartige Kolbenanordnung ist aus der GB-A-356 612 bekannt, bei der in jeder der beiden Rillen zwei sich nach Außen erweiternde Ringe angeordnet sind. Der Abstand zwischen dem inneren der beiden Ringe und dem Grund des Einstichs wird durch eine Scheibe vollständig ausgefüllt. Diese Anordnung ist derart ausgeführt, daß sie eine möglichst öldichte Verbindung bildet. Es hat sich jedoch gezeigt, daß in vielen Anwendungsfällen eine derartige Ölabschottung nicht zweckmäßig ist, da sie die Schmierung des Bolzens beeinträchtigt. Des Weiteren befinden sich die Enden des Kolbenbolzens vollständig in der Bolzenbohrung, wodurch Lagerprobleme im Betrieb auftreten können, was nachfolgend im Zusammenhang mit der DE 44 38 703 A1 näher beschrieben wird.

Aus der DE 44 38 703 A1 ist ein Kolben bekannt, bei dem die Rille für den Sicherungsring in der Bolzenbohrung angeordnet ist. Die Enden des Kolbenbolzens befinden sich vollständig in der Bolzenbohrung, wodurch Lagerprobleme im Betrieb auftreten können.

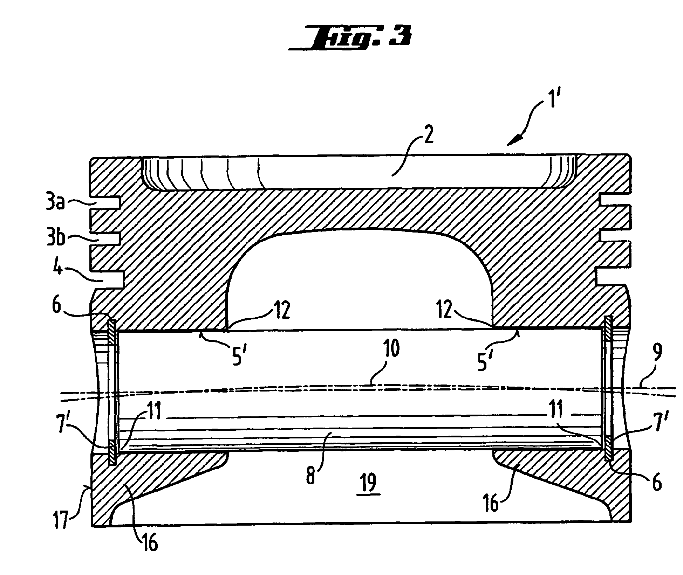

Dieser Stand der Technik ist in der Fig. 3 beispielhaft dargestellt, die einen vertikalen Schnitt durch einen Kolben 1' zeigt

Der Kolben 1' besitzt eine Brennraummulde 2, zwei Nuten 3a,b für die Kolbenringe und eine Nut 4 für den Ölabstreifring im Bereich der Kolbenringzone. Im Kolbenauge 16 ist eine Bolzenbohrung 5' angeordnet, in der der Kolbenbolzen 8 gelagert ist. Gegebenenfalls kann in der Bolzenbohrung 5' auch eine Lagerbuchse (nicht dargestellt) angeordnet sein.

Benachbart zum außenliegenden Ende der Bolzenbohrung 5' ist eine Rille 6 zur Aufnahme eines Bolzensicherungsringes 7 angeordnet, der den Bolzen 8 in der Bolzenbohrung 5' sichert. Im allgemeinen werden hierfür runde Seeger-Ringe oder Drahtsprengringe eingesetzt. Im unbelasteten Zustand ist die Bolzenachse mit der Augenachse 9 identisch. Unter Belastung während des Betriebs des Kolbens 1' biegt sich allerdings der Bolzen 8 durch, wodurch die Bolzenachse 10 den - in der Fig. 3 übertrieben dargestellten - Verlauf zeigt.

Die Durchbiegung des Bolzens 8 bewirkt, daß sich die äußere Bolzenlcante 11 in die Bohrung 5' eingräbt und den Ölfluß zwischen der Bolzenbohrung und dem Bolzen beeinträchtigt. Gleichzeitig gräbt sich auch die Kolbenkante 12 von der Oberseite in den Bolzen 8 ein, was ebenfalls den Ölaustausch und damit die Schmierung des Bolzens nachteilig beeinflußt.

Um hier Abhilfe zu schaffen, wurde in der DE 42 10 056 A 1 vorgeschlagen, in den Nabenbohrungen parallel zur Augenachse verlaufende Schmiemuten anzuordnen, die in dem zwischen engerem oberen und weiterem unteren Abstand der Naben liegenden Stufenbereich zum Kurbelraum hin offen sind. Da auch bei diesem Kolben die Bolzenenden innerhalb der Bolzenbohrung angeordnet sind, werden die Verschleißprobleme noch nicht zufriedenstellend gelöst.

Es ist daher Aufgabe der Erfindung, einen Kolben zu schaffen, der eine bezüglich Verschleiß und Ölschmierung verbesserte Bolzenlagerung aufweist.

Diese Aufgabe wird mit einem Kolben gelöst, bei dem die Bolzenbohrung beidseitig jeweils unter Ausbildung eines durchmessergrößeren Einstichs gegenüber der Kolbenaußenfläche zurückversetzt ist und die Rillen für den Bolzensicherungsring in den Einstichen angeordnet sind.

Dieser Kolben hat den Vorteil, daß die Bolzenenden gegenüber der Bolzenbohrung nach außen vorstehen und somit die äußere Bolzenkante freiliegt. Ein unweigerlich durch den Herstellungsprozeß bedingter Grad an der Bolzenaußenkante kann somit die Bolzenlagerung nicht beeinträchtigen. Ein weiterer Vorteil dieser Anordnung besteht darin, daß sich der durchbiegende Bolzen nicht mehr innerhalb der Lagerstelle abstützt und die Nabenbruchgefahr dadurch verringert wird. Dadurch, daß die Rille für den Bolzensicherungsring nicht in der Bolzenbohrung sondern in einem vorzugsweise ringförmigen Einstich angeordnet ist, wird zwischen dem eingesetzten Sicherungsring und der Bolzenbohrung ein Zwischenraum gebildet.

Vorzugsweise ist die Rille in Richtung der Augenachse beabstandet zur Bolzenbohrung angeordnet, so daß der Zwischenraum als Ölreservoir dienen kann und somit die Ölschmierung im Bereich der Bohrung zusätzlich verbessert.

Vorteilhafterweise ist die Länge der Bolzenbohrung kleiner gleich ihrem Durchmesser. Dadurch wird die Belastung im Endbereich der Bolzenbohrung gegenüber den herkömmlichen Bolzenbohrungen erheblich vermindert.

Die Schmierung im Bereich der Bolzenbohrung kann weiterhin dadurch verbessert werden, daß jedes Kolbenauge mindestens einen vorzugsweise vertikalen Ölzuführkanal aufweist, der einerseits in die Bolzenbohrung mündet und andererseits mit der Nut für den Ölabstreifring in Verbindung steht. Das vom Ölabstreifring abgestreifte Öl gelangt somit unmittelbar in die Bolzenbohrung, wodurch eine gezielte Verbesserung der Ölschmierung erzielt wird.

Der Ölzuführungskanal steht vorzugsweise über einen horizontalen Verbindungskanal mit dieser Nut in Verbindung. Vorzugsweise fluchtet der Verbindungskanal mit der unteren Nutfläche der Nut für den Ölabstreifring. Durch diese Maßnahme wird der Ölfluß in die Bolzenbohrung erleichtert.

Vorteilhafterweise liegt dem Ölzuführungskanal ein vorzugsweise vertikaler Ölauslaßkanal gegenüber. Während der Ölzuführkanal vorzugsweise von oben in die Bolzenbohrung mündet, führt der Ölauslaßkanal an der Unterseite des Bolzens das von oben zugeführte Öl nach unten in den Innenraum des Kolbens ab. Das bei jeder Hubbewegung vom Ölabstreifring in den Ölzuführkanal eingeleitere Öl wird somit auf einfache Weise abgeführt.

Vorzugsweise ist der Kolbenbolzen mit einem ovalen Bolzensicherungsring gesichert.

Beispielhafte Ausführungsformen der Erfindung werden nachfolgend anhand der Zeichnungen erläutert.

Es zeigen:
- Fig. 1: einen Vertikalschnitt durch einen erfindungsgemäßen Kolben,
- Fig. 2: die Seitenansicht des in Fig. 1 gezeigten Kolbens,
- Fig. 3: einen Vertikalschnitt durch einen Kolben gemäß des Standes der Technik.

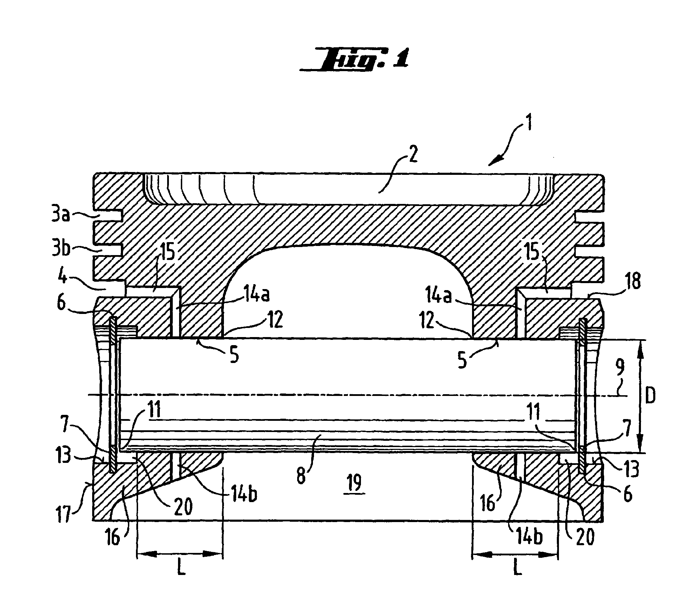

In der Fig. 1 ist ein Kolben 1 mit einer Brennraummulde 2, Kolbenringnuten 3a,b sowie einer Nut 4 für den Ölabstreifring dargestellt. Das Kolbenauge 16 weist eine Bolzenbohrung 5 auf, die gegenüber der Außenfläche 17 des Kolbens 1 zurückversetzt angeordnet ist. Zwischen der Außenfläche 17 und der Bolzenbohrung 5 ist ein durchmessergrößerer ringförmiger Einstich 13 angeordnet, so daß der Bolzen 8 mit seiner Außenkante 11 in diesen durch den Einstich gebildeten Freiraum vorsteht. Der Abstand der äußeren Enden der beiden Bolzenbohrungen 5 des Kolbens 1 ist kürzer als die Länge des eingesetzten Bolzens. Die Außenkante 11 des Bolzens 8 liegt somit frei und kann sich unter Belastung nicht in die Bolzenbohrung 5 eingraben, wie dies beim Stand der Technik der Fall ist. Die Länge L der Bolzenbohrung wird dadurch verringert werden und ist in der hier gezeigten Darstellung kleiner als der Durchmesser D der Bolzenbohrung 5.

Die Rille 6 für den Sicherungsring 7 ist in dem ringförmigen Einstich 13, angeordnet, so daß zwischen dem Sicherungsring 7 und der Bolzenbohrung 5 ein ringförmiger Freiraum 20 gebildet wird, in dem sich ein Ölreservoir für die Schmierung der Bolzenbohrung 5 bilden kann.

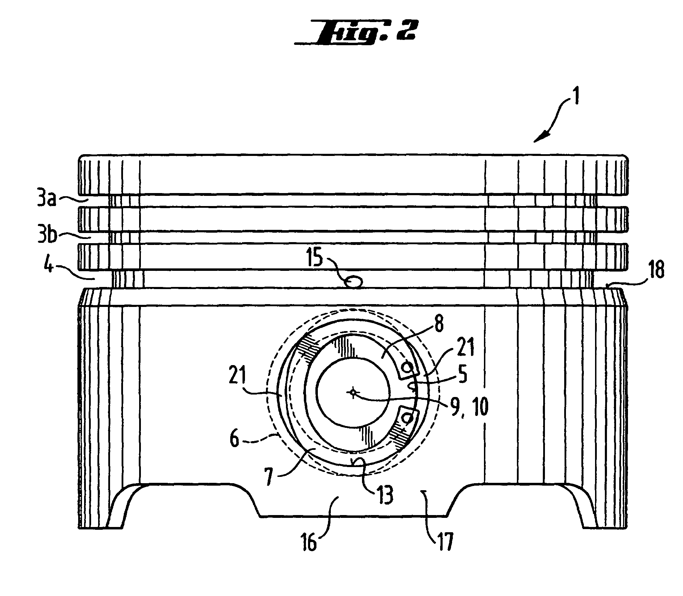

Als Bolzensicherungsring 7 kann ein ovaler Sprengring vorgesehen sein, der aufgrund der Tatsache, daß er nicht in die gesamte Rille 6 eingreift (s. Fig. 2), den Ölfluß von außen in Richtung Bolzenbohrung 5 begünstigt.

Zusätzlich ist ein vertikaler Ölzuführungskanal 14a vorgesehen, der vertikal von oben in die Bolzenbohrung 5 mündet und über einen horizontalen Verbindungskanal 15 mit der Nut 4 für den Ölabstreifring (nicht dargestellt) in Verbindung steht. Das vom Ölabstreifring in die Nut 4 beförderte Öl wird somit über den Verbindungskanal 15 und den vertikalen Ölzuführungskanal 14a unmittelbar der Bolzenbohrung 5 bzw. dem Bolzen 8 zugeführt, wodurch die Ölschmierung in diesem Bereich erheblich verbessert wird.

Gegenüberliegend ist im Kolbenauge16 ein Ölablaßkanal 14b angeordnet, durch den überschüssiges Öl im Bereich der Bolzenbohrung 5 in den Innenraum 19 des Kolbens 1 abfließen kann. Das Vorsehen eines Ölablaßkanals 14b bietet auch den Vorteil, daß das Einbringen des Ölzuführungskanals 14a herstellungstechnisch vereinfacht wird.

In der Fig. 2 ist eine Seitenansicht des in Fig. 1 gezeigten Kolbens 1 dargestellt. Es ist deutlich zu sehen, daß der Bolzensicherungsring 7 eine ovale Form aufweist und somit zusätzliche Freiräume 21 zwischen dem Bolzensicherungsring 7 und dem ringförmigen Einstich 13 zum Durchtritt von Öl vorhanden sind. Der Verbindungskanal 15 ist derart angeordnet, daß er mit der unteren Nutfläche 18 der Nut 4 fluchtet, wodurch die Ölzuführung verbessert wird.

### Bezugszeichen

- 1: Kolben
- 1': Kolben
- 2: Brennraummulde
- 3a,b: Ringnut
- 4: Ringnut für Ölabstreifring
- 5: Bolzenbohrung
- 5': Bolzenbohrung
- 6: Rille für Sicherungsring
- 7: Bolzensicherungsring
- 7': Bolzensicherungsring
- 8: Kolbenbolzen
- 9: Augenachse
- 10: Kolbenachse unter Belastung
- 11: Bolzenkante
- 12: Kolbenkante
- 13: ringförmiger Einstich
- 14a: vertikaler Zuführkanal
- 14b: Ölablaßkanal
- 15: horizontaler Verbindungskanal
- 16: Kolbenauge
- 17: Kolbenaußenfläche
- 18: untere Nutfläche
- 19: Innenraum
- 20: ringförmiger Freiraum
- 21: Freiraum

## Patentansprüche

1. Kolbenanordnung für Brennkraftmaschinen mit zwei Bolzenbohrungen (5), in denen ein Kolbenbolzen (8) gelagert ist, wobei die Bolzenbohrungen (5) zwei Rillen (6) für jeweils einen Bolzensicherungsring (7) sowie Ringnuten (3a, 3b, 4) in der Kolbenringzone für Kolbenringe und Ölabstreifring aufweist und wobei die Bolzenbohrung (5) beiderseits jeweils unter Ausbildung eines durchmessergrößeren Einstichs (13) gegenüber der Kolbenaußenfläche (17) zurückversetzt ist und die Rillen (6) für den Bolzensicherungsring (7) in den Einstichen (13) angeordnet sind, **dadurch gekennzeichnet, dass** der Kolbenbolzen (8) beiderseits gegenüber den Bolzenbohrungen (5) nach außen vorsteht, so dass die äußeren Bolzenkanten frei liegen.

2. Kolbenanordnung nach Anspruch 1, **dadurch gekennzeichnet, dass** der Einstich (13) ringförmig ist.

3. Kolbenanordnung nach Anspruch 1 oder 2, **dadurch gekennzeichnet, dass** die Rille (6) in Richtung der Augenachse (9) beabstandet zur Bolzenbohrung (5) angeordnet ist.

4. Kolbenanordnung nach einem der Ansprüche 1 bis 3, **dadurch gekennzeichnet, dass** die Länge L der Bolzenbohrung (5) kleiner gleich ihres Durchmessers D ist.

5. Kolbenanordnung nach einem der Ansprüche 1 bis 4, **dadurch gekennzeichnet, dass** jedes Kolbenauge (16) mindestens einen Ölzuführkanal (14a) aufweist, der einerseits in die Kolbenbohrung (5) mündet und andererseits mit der Nut (4) für den Ölabstreifring in Verbindung steht.

6. Kolbenanordnung nach Anspruch 5, **dadurch gekennzeichnet, dass** der Ölzufuhrkanal (14a) über einen horizontalen Verbindungskanal (15) mit der Nut (4) in Verbindung steht.

7. Kolbenanordnung nach einem der Ansprüche 1 bis 6, **dadurch gekennzeichnet, dass** der Verbindungskanal (15) mit der unteren Nutfläche (18) der Nut (4) fluchtet

8. Kolbenanordnung nach einem der Ansprüche 1 bis 6, **dadurch gekennzeichnet, dass** dem vertikalen Ölzuführungskanal (14a) ein vertikaler Ölauslaßkanal (14b) gegenübersteht.

9. Kolbenanordnung nach einem der Ansprüche 1 bis 8, **dadurch gekennzeichnet, dass** der Kolbenbolzen (8) mit ovalen Bolzensicherungsringen (7) gesichert ist

## Claims

1. Piston arrangement for internal combustion engines, with two pin bores (5), in which a piston pin (8) is mounted, the pin bores (5) having two grooves (6) in each case for a pin securing ring (7), and also annular slots (3a, 3b, 4) in the piston-ring zone for piston rings and an oil wiping ring, and the pin bore (5) being set back on each of the two sides with respect to the piston outer face (17) so as to form an indentation (13) of larger diameter, and the grooves (6) for the pin securing ring (7) being arranged in the indentations (13), **characterized in that** the piston pin (8) projects outwards on both sides with respect to the pin bores (5), so that the outer pin edges are exposed.

2. Piston arrangement according to Claim 1, **characterized in that** the indentation (13) is annular.

3. Piston arrangement according to Claim 1 or 2, **characterized in that** the groove (6) is arranged, spaced apart from the pin bore (5), in the direction of the boss axis (9).

4. Piston arrangement according to one of Claims 1 to 3, **characterized in that** the length L of the pin bore (5) is smaller than or equal to its diameter D.

5. Piston arrangement according to one of Claims 1 to 4, **characterized in that** each piston boss (16) has at least one oil supply duct (14a) which, on the one hand, issues into the piston bore (5) and, on the other hand, is connected to the slot (4) for the oil wiping ring.

6. Piston arrangement according to Claim 5, **characterized in that** the oil supply duct (14a) is connected to the slot (4) via a horizontal connecting duct (15).

7. Piston arrangement according to one of Claims 1 to 6, **characterized in that** the connecting duct (15) is in alignment with the lower slot face (18) of the slot (4).

8. Piston arrangement according to one of Claims 1 to 6, **characterized in that** a vertical oil outlet duct (14b) is located opposite the vertical oil supply duct (14a).

9. Piston arrangement according to one of Claims 1 to 8, **characterized in that** the piston pin (8) is secured by means of oval pin securing rings (7).

## Revendications

1. Agencement de piston pour moteurs à combustion interne, comprenant deux alésages d'axe (5) dans lesquels est monté un axe de piston (8), les alésages d'axe (5) présentant deux gorges (6) pour respectivement une bague de fixation d'axe (7) ainsi que des rainures annulaires (3a, 3b, 4) dans la zone du segment de piston pour des segments de piston et une bague de grattage d'huile, et l'alésage d'axe (5) étant en retrait des deux côtés par rapport à la surface extérieure du piston (17) à chaque fois en formant une encoche (13) de plus grand diamètre et les gorges (6) pour la bague de fixation d'axe (7) étant disposées dans les encoches (13), **caractérisé en ce que** l'axe de piston (8) fait saillie des deux côtés vers l'extérieur par rapport aux alésages d'axe (5), de sorte que les arêtes extérieures de l'axe soient exposées.

2. Agencement de piston selon la revendication 1, **caractérisé en ce que** l'encoche (13) est annulaire.

3. Agencement de piston selon la revendication 1 ou 2, **caractérisé en ce que** la gorge (6) est disposée dans la direction de l'axe de l'oeil (9) à distance de l'alésage d'axe (5).

4. Agencement de piston selon l'une quelconque des revendications 1 à 3, **caractérisé en ce que** la longueur L de l'alésage d'axe (5) est inférieure ou égale à son diamètre D.

5. Agencement de piston selon l'une quelconque des revendications 1 à 4, **caractérisé en ce que** chaque oeil de piston (16) présente au moins un conduit d'amenée d'huile (14a) qui débouche d'une part dans l'alésage de piston (5) et est d'autre part en liaison avec la rainure (4) pour la bague de grattage d'huile.

6. Agencement de piston selon la revendication 5, **caractérisé en ce que** le conduit d'amenée d'huile (14a) est en liaison avec la rainure (4) par le biais d'un conduit de liaison horizontal (15).

7. Agencement de piston selon l'une quelconque des revendications 1 à 6, **caractérisé en ce que** le conduit de liaison (15) est en affleurement avec la surface de rainure inférieure (18) de la rainure (4).

8. Agencement de piston selon l'une quelconque des revendications 1 à 6, **caractérisé en ce qu'**un conduit de sortie d'huile vertical (14b) est en regard du conduit d'amenée d'huile vertical (14a).

9. Agencement de piston selon l'une quelconque des revendications 1 à 8, **caractérisé en ce que** l'axe de piston (8) est fixé avec des bagues de fixation d'axe ovales (7).
